# FASCICULE DE BREVET EUROPEEN

(11) **EP 0 342 124 B1**
(45) Date de publication et mention de la délivrance du brevet: **21.07.1993**
(21) Numéro de dépôt: 89401298.8
(22) Date de dépôt: 10.05.1989
(51) Int. Cl.: A23P 1/08, A21D 13/00

(54) **Procédé de fabrication d'aliments fourrés par évidement**
Verfahren zur Herstellung von gefüllten Nahrungsmitteln durch Ausbohrung
Process for preparing stuffed foodstuffs by coring

(30) Priorité: 11.05.1988 FR 8806380
(43) Date de publication de la demande: 15.11.1989
(73) Titulaire: Goue, Michel Gabriel Adrien, F-76460 Saint Valery (FR)
(72) Inventeur: Goue, Michel Gabriel Adrien, F-76460 Saint Valery (FR)
(74) Mandataire: Moncheny, Michel

(56) Documents cités:
- EP-A- 0 152 218
- DE-A- 3 247 151
- GB-A- 2 178 291
- US-A- 2 027 596
- US-A- 2 351 788
- US-A- 4 640 187

## Description

La présente invention a pour objet un procédé de fabrication d'aliments fourrés, sous forme de tranches, par évidement.

L'invention concerne plus particulièrement la fabrication de pains toasts, mini-pains, ou canapés, fourrés et sous forme de tranches, ou de tout autre aliment que l'on peut présenter sous une forme semblable, grâce à la technique du froid.

US-A- 2 351 788 décrit un procédé pour fourrer un fruit dénoyauté, selon lequel on verse une farce chaude prenant en masse dans le fruit refroidi.

L'invention concerne donc un procédé de fabrication d'aliments fourrés sous forme de tranches, caractérisé en ce que l'on congèle à une température de 0°C à -40°C un premier produit alimentaire constitué par du pain ou de la brioche, on évide ce produit en y effectuant à cette température au moins un perçage suivant l'un de ses axes, le cas échéant on débarrasse les miettes ou débris par soufflage d'air à travers l'évidement, on injecte dans l'évidement un second produit alimentaire sous forme de pâte ou de mousse à une température de 0°C à + 30°C, et on effectue le tranchage de l'aliment fourré ainsi obtenu à une température inférieure à 0°C.

Le premier produit alimentaire, ayant de préférence une forme oblongue et une structure suffisamment rigide, peut être notamment constitué par du pain (par exemple pain toast, baguette, etc...), une brioche, , etc.

Le bloc de premier produit alimentaire est congelé à une température de 0° à -40°C, généralement entre -10° et -30°C, surtout entre -20° et -30°C selon sa nature, afin de lui fournir une rigidité suffisante lors de son perçage sans déformation de la structure obtenue après cette opération, et aussi pour permettre la solidification du second produit alimentaire, comme on le verra ci-dessous.

L'évidement dudit premier produit alimentaire peut être effectué notamment au moyen d'un foret ou de tout autre outil permettant le perçage d'une cavité à section à peu près constante. Le perçage peut être effectué de part en part du bloc du premier produit alimentaire, mais cette manière de procéder n'est pas indispensable. La matière ainsi dégagée constitue elle-même un produit de base tout prêt à être utilisé dans d'autres préparations, ce qui permet d'éviter les pertes. Ainsi, selon une variante de l'invention il est possible d'effectuer l'évidement en découpant des tronçons de matière à l'emporte pièce ou moyen d'un foret creux. Ces tronçons de matière, par exemple sous forme de bâtonnets, pourront être revêtus en totalité ou partiellement par des condiments, ou des sucreries (épices, sésame, amandes, chocolat, lustrage, etc), ou le cas échéant d'être utilisés dans des préparations culinaires telles que des plats en sauce.

Le soufflage d'air à travers la cavité de l'évidement est une opération facultative selon l'invention et sera choisie en fonction de la qualité du premier produit alimentaire. Il sera utile notamment lorsque celui-ci est constitué de pain de mie, de brioche ou de toute matière produisant facilement des miettes.

L'injection dudit second produit alimentaire dans la cavité de l'évidement peut être effectuée par exemple au moyen d'une seringue ou à partir d'un malaxeur-doseur, éventuellement équipé d'une résistance chauffante et d'un thermostat. Ce second produit alimentaire doit être une matière molle, sous forme de pâte ou de mousse, qui se solidifie au contact de la paroi froide de l'évidement. Il peut être consituté notamment d'une mousse de légumes, de viande, de poisson, de fromage, de chocolat, de fruits ou de tout produit similaire. L'injection peut être effectuée d'un côté, ou bien des deux côtés de la cavité, lorsque le perçage a été effectué de part en part du bloc de premier produit alimentaire.

Finalement on effectue le tranchage de l'aliment fourré à froid, à l'épaisseur désirée, par exemple de l'ordre de 0,5 à 2 cm. Le travail à froid permet d'éviter la déformation de la texture du premier produit alémentaire et maintient en place le second produit alimentaire constituant la matière fourrée (ou farce).

Si on le désire, on peut enrober ledit premier produit alimentaire d'une couronne esthétique et/ou d'assaisonnement (épices, sésame, sucre, etc). Cette opération est de préférence effectuée avant l'étape de congélation, mais pourrait l'être à un autre moment (mais avant l'étape de tranchage) sous réserve que le produit alimentaire soit suffisamment froid.

Les tranches d'aliment fourré obtenu selon la présente invention peuvent être séparées par des feuillets de qualité alimentaire (de papier glacé, aluminium ou plastique), et l'aliment fourré peut être reconstitué à la longueur souhaitée. Il peut être conservé par surgélation à -20°C, ce qui assure une durée de vie plus longue, ou sous vide total suivi de chaîne de froid à +0° à 6°C. Il peut être conditionné en barquettes, sous gaz ou non, celles-ci permettant une présentation inclinée ou à plat.

L'intérêt du procédé selon l'invention, outre la qualité esthétique des produits obtenus, est la possibilité de son automatisation presque complète et son application avec un maximum d'hygiène.

La description suivante en regard des dessins annexés illustre la mise en oeuvre de l'invention. Sur ces dessins :
- la fig. 1 représente un produit alimentaire constituté par un pain toast de forme sensiblement cylindrique,
- la fig. 2 représente l'étape de perçage de ce pain,
- la fig. 3 représente l'étape de soufflage de l'évidement réalisé par le perçage,
- la fig. 4 représente l'étape d'injection d'un second produit alimentaire,
- la fig. 5 représente l'étape de tranchage,
- la fig. 6 représente l'aliment (pain toast) fourré obtenu selon l'invention.

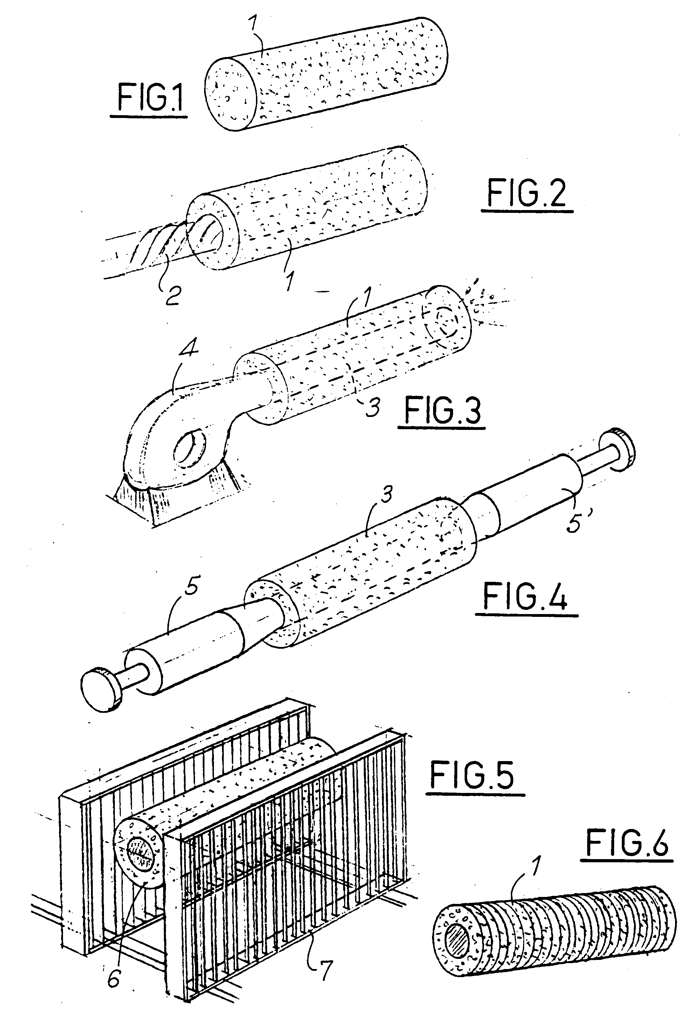

Le procédé selon l'invention est réalisé sur ces dessins avec un premier produit alimentaire constitué par un pain toast. Le pain toast 1 représenté sur la Fig. 1 est de forme générale sensiblement cylindrique (diamètre 45 mm) et il est enrobé d'un assaisonnement à base d'épices. Après congélation à une température d'environ -25°C, on évide (Fig. 2) ce pain toast 1 en effectuant un perçage de 20 mm de diamètre à l'aide d'un foret 2, de part en part du pain toast 1 suivant l'axe du cylindre. Sur la Fig. 3 on débarrasse les miettes par soufflage d'air à travers l'évidement 3 au moyen d'un dispositif 4. Ensuite, comme illustré sur la Fig. 4, on injecte dans l'évidement 3, au moyen de seringues 5 et 5', un second produit alimentaire constitué par exemple d'une mousse de légumes aux noix, à une température d'environ + 15° C. Cette mousse se solidifie au contact de la paroi froide de l'évidement 3. Finalement, on effectue le tranchage (Fig. 5) de l'aliment fourré ainsi obtenu à l'aide d'un appareil 7 pour obtenir des tranches de pain toast fourré aux légumes (Fig. 6) que l'on peut conditionner à souhait.

La matière enlevée lors de l'opération de perçage (Fig. 2), peut être récupérée pour la préparation de plats divers. Ainsi, si l'on a utilisé un foret creux, le coeur de pâte cuite enlevée, sous forme de bâtonnets, peut être enrobé de mousse de chocolat fluide par bain ou être enrobé d'une préparation à base de viande ou de poisson, le cas échéant tranchée finement et enveloppée d'une mousse pour faire adhérer ces tranches. Tranchés ou non, ces bâtonnets moelleux peuvent être conservés au frais, sous vide ou surgelés.

## Revendications

1. Procédé de fabrication d'aliments fourrés sous forme de tranches, caractérisé en ce que l'on congèle à une température de 0°C à -40°C un premier produit alimentaire constitué par du pain ou de la brioche, on évide ce produit en y effectuant à cette température au moins un perçage suivant l'un de ses axes, le cas échéant on débarrasse les miettes ou débris par soufflage d'air à travers l'évidement, on injecte dans l'évidement un second produit alimentaire sous forme de pâte ou de mousse à une température de 0°C à + 30°C, et on effectue le tranchage de l'aliment fourré ainsi obtenu à une température inférieure à 0°C.

2. Procédé selon la revendication 1, caractérisé en ce que l'on congèle ledit premier produit alimentaire entre -10° et -30°C, surtout -20° et -30°C.

3. Procédé selon la revendication 1 ou 2, caractérisé en ce que l'on effectue le perçage du premier produit alimentaire de part en part.

4. Procédé selon la revendication 3, caractérisé en ce que l'on injecte ledit second produit alimentaire des deux côtés de l'évidement.

5. Procédé selon l'une quelconque des revendications 1 à 4, caractérisé en ce que l'on enrobe le premier produit alimentaire d'une couronne esthétique et/ou d'assaisonnement.

6. Procédé selon l'une quelconque des revendications 1 à 5, caractérisé en ce que l'on effectue l'évidement en découpant des tronçons de matière.

7. Procédé selon la revendication 6, caractérisé en ce que les tronçons de matière sont sous forme de bâtonnets.

## Patentansprüche

1. Verfahren zur Herstellung gefüllter Nahrungsmittel in Form von Scheiben, dadurch gekennzeichnet, daß man ein erstes Nahrungsmittelprodukt, das aus Brot oder Brioche besteht, bei einer Temperatur von 0 °C bis -40 °C einfriert, man dieses Produkt ausbohrt, indem man daran bei dieser Temperatur wenigstens eine Bohrung längs der einen seiner Achsen durchführt, man gegebenenfalls Krümel oder Reste durch Blasen von Luft durch die Ausbohrung entfernt, man in die Ausbohrung ein zweites Nahrungsmittelprodukt in Form einer breiigen Masse oder Schaum bei einer Temperatur von 0 °C bis +30 °C hineinspritzt und man das In-Scheiben-Schneiden des so erhaltenen gefüllten Nahrungsmittels bei einer Temperatur unterhalb von 0 °C durchführt.

2. Verfahren nach Anspruch 1, dadurch gekennzeichnet, daß man das erste Nahrungsmittelprodukt zwischen -10 °C und -30 °C, bevorzugt -20 °C und -30 °C einfriert.

3. Verfahren nach Anspruch 1 oder 2, dadurch gekennzeichnet, daß man die Bohrung des ersten Nahrungsmittelproduktes durch und durch bewerkstelligt.

4. Verfahren nach Anspruch 3, dadurch gekennzeichnet, daß man das zweite Nahrungsmittelprodukt von beiden Seiten der Ausbohrung hineinspritzt.

5. Verfahren nach irgendeinem der Ansprüche 1 bis 4, dadurch gekennzeichnet, daß man das erste Nahrungsmittelprodukt mit einem ästhetischen Gewinde und/oder Gewürzen umgibt.

6. Verfahren nach irgendeinem der Ansprüche 1 bis 5, dadurch gekennzeichnet, daß man die Ausbohrung durch Abschneiden von Teilstücken von dem Material durchführt.

7. Verfahren nach Anspruch 6, dadurch gekennzeichnet, daß die Teilstücke des Materials in Form kleiner Stöckchen vorliegen.

## Claims

1. Method for the manufacture of stuffed foods in the form of slices, characterised in that a first food product constituted by bread or brioche, is frozen at a temperature of 0°C to -40°C, this product is hollowed out by carrying out at least one boring operation along one of its axes, at this temperature, if necessary the crumbs or remains are removed by blowing air through the cavity, a second food product in the form of a paste or mousse is injected into the cavity at a temperature of 0°C to +30°C and the slicing of the stuffed food thus obtained is carried out at a temperature less than 0°C.

2. Method according to Claim 1, characterised in that said first food product is frozen at a temperature between -10°C and -30°C, above all -20°C and -30°C.

3. Method according to Claim 1 or 2, characterised in that the boring of the first food product is carried out from end to end.

4. Method according to Claim 3, characterised in that said second food product is injected from two sides of the cavity.

5. Method according to one of Claims 1 to 4, characterised in that the first food product is covered with a decorative ring and/or seasoning ring.

6. Method according to one of Claims 1 to 5, characterised in that the cavity is produced by cutting out portions of material.

7. Method according to Claim 6, characterised in that the portions of material are in the form of small rods.
